# DEMANDE DE BREVET EUROPEEN

(11) **EP 0 754 935 A1**
(43) Date de publication de la demande: **22.01.1997**
(21) Numéro de dépôt: 96401565.5
(22) Date de dépôt: 15.07.1996
(51) Int. Cl.: G01K 1/14

(54) **Dispositif de mesure de la température d'une paroi chaude**

(30) Priorité: 18.07.1995 FR 9508679
(71) Demandeur: ELF ANTAR FRANCE, 92400 Courbevoie (FR)
(72) Inventeur: Drouet, Pierre, 69530 Brignais (FR)
(74) Mandataire: Timoney, Ian Charles Craig

(57) **Abrégé**

L'invention concerne un dispositif de mesure de la température d'une paroi chaude.

Selon l'invention, l'élément (2) de mesure logé dans une pièce (6) d'appui est maintenu en contact avec la paroi (1) chaude grâce à des moyens (12) de serrage montés sur un cavalier (11) support.

L'invention trouve son application notamment dans les usines métallurgiques, pétrolières, chimiques, nucléaires, les cimenteries, les verreries et les centrales thermiques de production de vapeur.

## Description

### DOMAINE TECHNIQUE

La présente invention concerne un dispositif de mesure de la température d'une paroi notamment dans une atmosphère corrosive.

Elle trouve son application dans les industries de traitement du pétrole brut, les industries chimiques et pétrochimiques, les verreries, les cimenteries, les cokeries et les industries dans lesquelles sont utilisées des générateurs de vapeur et l'industrie nucléaire.

### ETAT DE LA TECHNIQUE ANTERIEURE

La conduite en sécurité d'équipements utilisés dans différentes industries pour chauffer des fluides liquides ou gazeux à haute température, nécessite la connaissance précise de la température de la paroi extérieure de ces équipements. C'est le cas par exemple des tubes montés dans les fours des unités de traitement du pétrole brut, dans lesquels circulent des hydrocarbures. La température de la surface extérieure de ces tubes ne doit pas dépasser la valeur limite que peut supporter l'alliage métallique avec lequel ils sont fabriqués, sans risque de destruction.

Les dispositifs de mesure de température de la surface de ces tubes sont généralement en contact avec les gaz corrosifs chauds, qui résultent de la combustion d'hydrocarbures ou de produits carbonés, contenant des éléments tels que le soufre dont les produits de combustion sont particulièrement corrosifs.

De plus, ce type d'équipement doit fonctionner en continu pendant de longues périodes, par exemple 3 à 5 ans, au cours desquelles des interventions de maintenance doivent être aussi courtes que possible.

Un dispositif pour la protection d'instruments de mesure, dans une atmosphère corrosive chaude est décrit dans le brevet FR 2.699.669. Ce dispositif comporte un fourreau qui entoure au moins partiellement l'instrument de mesure, en étant séparé de lui par un espace annulaire, ce fourreau débouchant par une de ses extrémités dans l'atmosphère dans laquelle la mesure est effectuée tandis que son autre extrémité est raccordée à un moyen d'alimentation en un gaz inerte vis-à-vis de l'instrument de mesure, de manière à pouvoir faire circuler le gaz inerte entre le fourreau et ledit instrument de mesure.

Lorsque ce dispositif est utilisé pour la mesure de la température d'une paroi au moyen d'un thermocouple, par exemple une température de peau de tube dans un four de chauffage d'un fluide liquide ou gazeux, le courant de gaz inerte doit balayer le thermocouple pour éviter que les gaz corrosifs de l'atmosphère du four soient en contact avec lui.

Cet apport de gaz modifie la température du thermocouple et par conséquent fausse la mesure de la température de la paroi. De plus, le montage de ce dispositif est compliqué du fait de l'alimentation en gaz inerte qui n'est généralement pas disponible à proximité du point de mesure.

Pour des installations fonctionnant en continu, la consommation d'un gaz inerte peut s'avérer très onéreuse. Cette consommation directement proportionnelle au nombre de points de mesures engendre des frais de fonctionnement importants et rend de ce fait le dispositif inadapté à des mesures nombreuses.

De plus, la gaine dans laquelle est logé le thermocouple doit être soudée sur la paroi dont on veut mesurer la température, ce qui exclut tout démontage, et nécessite des temps d'intervention longs pour remplacer le thermocouple.

Avec ce dispositif, le thermocouple est soumis au rayonnement thermique des éléments chauffants qui l'environnent. Par exemple, le rayonnement des flammes produites par des brûleurs d'hydrocarbures dans des fours. Ce rayonnement est à l'origine d'erreurs importantes sur la valeur de la mesure obtenue avec ce dispositif. Il ne peut donc être utilisé que pour mesurer des températures de parois qui ne sont pas exposées à des rayonnements thermiques. Ce qui limite considérablement ses applications.

### EXPOSE DE L'INVENTION

La présente invention a justement pour objet de remédier à ces inconvénients et notamment de fournir un dispositif précis et fiable de mesure de la température d'une paroi chaude notamment dans une atmosphère corrosive.

Le dispositif de l'invention minimise les effets des rayonnements thermiques auxquels il est soumis et permet le remplacement rapide de l'élément de mesure de la température, de manière aisée.

Son installation ne nécessite pas d'amenée d'un gaz inerte au point de mesure, et son exploitation n'exige pas de consommation de gaz inerte.

L'élément de mesure de la température est bien protégé de l'action corrosive du milieu ambiant, ce qui lui confère une excellente tenue dans le temps.

A cette fin, la présente invention propose un dispositif de mesure de la température d'une paroi chaude comportant un élément de mesure muni de moyens de raccordement électrique protégés partiellement par une gaine caractérisé en ce qu'il comporte en outre, soudée à l'extrémité de la gaine tournée vers l'élément de mesure, une pièce d'appui, pourvue d'une part, sur une de ses faces, d'un évidement dans lequel est placé d'élément de mesure et d'autre part, d'un canal débouchant dans ledit évidement pour assurer le passage de la partie non protégée des moyens de raccordement électrique, un cavalier support muni de moyens de serrage soudé sur la paroi chaude de manière à constituer un logement pour la pièce d'appui, les dimensions de ladite pièce d'appui et dudit cavalier support étant telles que ces deux éléments une fois montés soient séparés par un espace libre et d'autre part en ce que l'élément de mesure est maintenu en contact avec la paroi chaude par la pièce d'appui sur laquelle agissent les moyens de serrage du cavalier support.

Selon une autre caractéristique, la présente invention propose un dispositif de mesure caractérisé en ce que les moyens de serrage comportent au moins une vis pointeau.

Selon une autre caractéristique, la présente invention propose un dispositif de mesure caractérisé en ce que la face de la pièce d'appui pourvue de l'évidement dans lequel est placé l'élément de mesure, est usinée pour être en contact partiel avec la paroi chaude.

Selon une autre caractéristique, la présente invention propose un dispositif de mesure caractérisé en ce que la gaine de la protection des moyens de raccordement électrique et la pièce d'appui sont protégées par un revêtement à base d'au moins un produit céramique.

### BREVE DESCRIPTION DES DESSINS

L'invention sera mieux comprise à l'aide de la description qui suit, d'une mode de réalisation donné à titre d'exemple en référence aux dessins annexés dans lesquels :
- la figure 1 représente schématiquement les principaux éléments constitutifs du dispositif de mesure de température non assemblés,
- la figure 2 représente schématiquement la pièce d'appui, soudée à la gaine de protection des moyens de raccordement électrique de l'élément de mesure,
- les figures 3a et 3b représentent en coupes longitudinale et transversale les principaux éléments assemblés, du dispositif de mesure de température,
- la figure 4 représente un mode particulier de réalisation de la pièce d'appui.

### EXPOSE DETAILLE DE L'INVENTION

D'une manière générale, le dispositif de l'invention est utilisé pour mesurer la température d'une paroi chaude, notamment dans une atmosphère corrosive, telle que la température de surface de tubes de fours utilisés pour chauffer des fluides liquides ou gazeux.

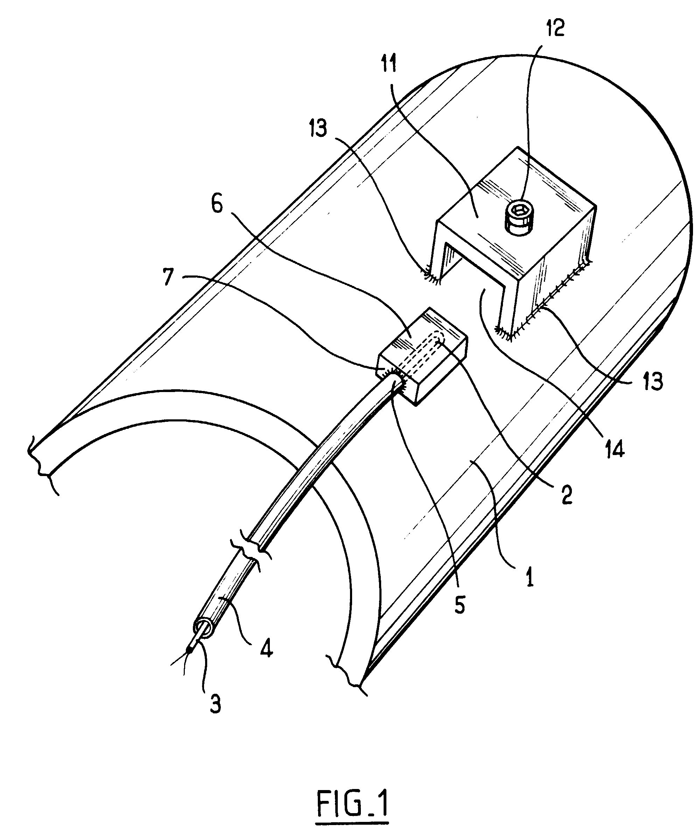

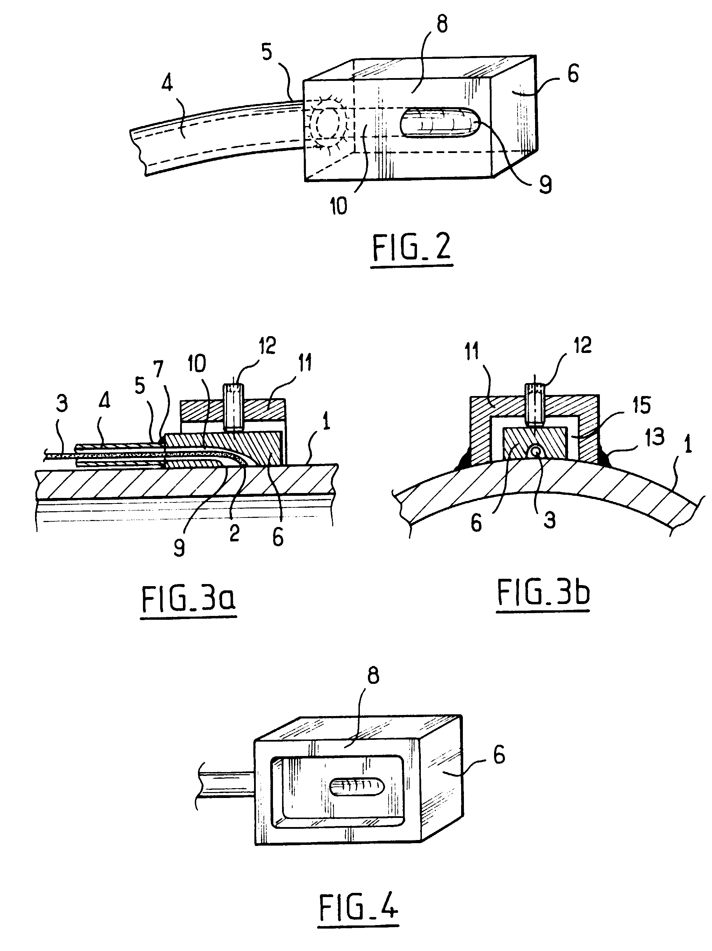

Selon le mode de réalisation représenté sur la figure 1 et partiellement sur la figure 2, le dispositif comporte :
- un élément 2 de mesure de la température de la paroi 1,
- des moyens 3 de raccordement électrique de l'élément 2 de mesure de la température,
- une gaine 4 de protection des moyens 3 de raccordement électrique dont l'extrémité 5 est tournée vers l'élément 2 de mesure de température,
- une pièce 6 d'appui,
- une soudure 7 de l'extrémité 5 de la gaine 4 sur la pièce 6 d'appui,
- un évidement 9 débouchant sur la face 8 de la pièce 6 d'appui,
- un canal 10 de passage des moyens 3 de raccordement électrique,
- un cavalier 11 support,
- des moyens 12 de serrage,
- un logement 14 pour la pièce 6 d'appui.

Le dispositif comporte également non représentés sur les figures des moyens électroniques de traitement du signal électrique émis par l'élément 2 de mesure de la température auxquels il est raccordé.

L'élément 2 de mesure peut être un thermocouple, ou une sonde de mesure de température, à résistance ou à semiconducteur ou tout autre type de sonde. Dans le cas du thermocouple, celui-ci est constitué par la soudure des extrémités de deux fils métalliques de natures différentes, isolés électriquement sauf à leurs extrémités soudées.

Ces fils métalliques constituant les moyens 3 de raccordement électrique sont protégés par une gaine 4, sauf au voisinage du thermocouple.

L'extrémité 5 de la gaine 4 est soudée à la pièce 6 d'appui, de manière à ce que la partie non protégée des moyens 3 de raccordement électrique pénètrent dans le canal 10, et de sorte que le thermocouple 2 se trouve dans l'évidement 9, qui débouche sur la face 8 de la pièce 6 d'appui, le thermocouple 2 pourra être avantageusement bloqué en position dans le canal 10 de passage au moyen d'une vis de serrage.

Le cavalier 11 est soudé sur la paroi 1 au moyen des soudures 13. L'espace libre entre les branches du cavalier 11 et la paroi 1 constitue un logement 14 pour la pièce 6 d'appui.

Cette dernière est montée dans son logement de manière à ce que la face 8, munie de l'évidement 9 soit en contact avec la paroi 1 dont on veut mesurer la température. Grâce à cette disposition, le thermocouple 2 placé dans l'évidement 9 est en contact avec la paroi 1.

Les dimensions de la pièce 6 d'appui et du cavalier 11 sont telles que la pièce 6 d'appui étant en place dans le logement 14, un espace 15 subsiste entre ces deux éléments, comme représenté sur la figure 3.

A l'aide des moyens 12 de serrage, la pièce 6 d'appui est maintenue est place dans le logement 14 et le thermocouple 2 est appuyé sur la paroi 1. A titre d'exemple de moyens de serrage, on peut citer une vis pointeau dont l'extrémité vient s'appuyer au fond d'un logement pratiqué dans la pièce 6 d'appui. On peut également citer une clavette emmanchée à force dans l'espace 15.

Grâce à la présence de l'espace 15 entre la pièce 6 d'appui et le cavalier 11, l'échauffement du cavalier 11 résultant des rayonnements thermiques des éléments chauffants environnants, n'est pas transmis à la pièce d'appui 6, sauf de façon minime par les moyens 12 de serrage. Ainsi le thermocouple 2 est protégé efficacement des rayonnements thermiques environnants. Le signal qu'il délivre n'étant pas influencé par ce rayonnement, il est représentatif de la température de la paroi 1.

La face 8 de la pièce 6 d'appui peut être usinée pour s'adapter à la forme de la paroi 1.

Le thermocouple 2 dans son logement est bien protégé de l'action des gaz corrosifs du milieu ambiant.

Le montage et le démontage de la pièce 6 d'appui soudée à la gaine 4 de protection et du thermocouple sont faciles à exécuter dans un temps très court. Ils ne nécessitent pas l'intervention d'un soudeur spécialisé sur place.

L'installation et la maintenance du dispositif de l'invention sont de ce fait économiques.

Le cavalier 11 support est avantageusement réalisé dans le même métal que l'équipement dont on veut mesurer la température.

Les formes du cavalier 11 et de la pièce 6 d'appui représentées sur les figures sont données à titre d'exemple. L'homme du métier pourra facilement déterminer des formes différentes bien adaptées à la forme de la paroi dont on veut mesurer la température.

Selon un autre mode de réalisation représenté sur la figure 4, la face 8 de la pièce d'appui 6 est usinée afin de réduire sa surface de contact avec la paroi 1, ce qui a pour effet de diminuer l'influence de la pièce 6 d'appui, sur la température de la paroi 1 au niveau de l'élément de mesure, et ainsi d'améliorer la précision de la mesure.

Selon une dernière caractéristique de l'invention, la gaine de protection des moyens de raccordement électrique et la pièce d'appui sont recouvertes d'un matériau céramique, pour augmenter la résistance à la corrosion de ces éléments.

## Revendications

1. Dispositif de mesure de la température d'une paroi (1) chaude comportant un élément (2) de mesure muni de moyens (3) de raccordement électrique protégés partiellement par une gaine (4) caractérisé en ce qu'il comporte en outre, soudée à l'extrémité de la gaine (4) tournée vers l'élément (2) de mesure, une pièce (6) d'appui, pourvue d'une part, sur une de ses faces (8), d'un évidement (9) dans lequel est placé l'élément (2) de mesure et d'autre part, d'un canal (10) débouchant dans ledit évidement (9) pour assurer le passage de la partie non protégée des moyens (3) de raccordement électrique, un cavalier (11) support muni de moyens (12) de serrage soudé sur la paroi (1) chaude de manière à constituer un logement (14) pour la pièce (6) d'appui, les dimensions de ladite pièce (6) d'appui et dudit cavalier (11) support étant telles que ces deux éléments une fois montés soient séparés par un espace (15) libre et d'autre part en ce que l'élément (2) de mesure est maintenu en contact avec la paroi (1) chaude par la pièce (6) d'appui sur laquelle agissent les moyens (12) de serrage du cavalier (11) support.

2. Dispositif de mesure selon la revendication 1 caractérisé en ce que les moyens (12) de serrage comportent au moins une vis pointeau.

3. Dispositif de mesure selon la revendication 1 ou 2 caractérisé en ce que la face (8) de la pièce (6) d'appui pourvue de l'évidement (9) dans lequel est placé l'élément (2) de mesure, est usinée pour être en contact partiel avec la paroi (1) chaude.

4. Dispositif de mesure selon l'une quelconque des revendications 1 à 3 caractérisé en ce que la gaine (4) de protection des moyens (3) de raccordement électrique et la pièce (6) d'appui sont protégées par un revêtement à base d'au moins un produit céramique.
